(19) Europäisches Patentamt
European Patent Office
Office européen des brevets

(11) EP 4 571 291 A1

(12) EUROPEAN PATENT APPLICATION

(43) Date of publication:
18.06.2025 Bulletin 2025/25

(51) International Patent Classification (IPC):
*G01N 17/00* (2006.01)

(21) Application number: 24206528.2

(22) Date of filing: 14.10.2024

(52) Cooperative Patent Classification (CPC):
G01N 17/006

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 14.12.2023 JP 2023211143

(71) Applicant: Suzuki Motor Corporation
Shizuoka 432-8611 (JP)

(72) Inventors:
• TAKEDA, Munenobu
Hamamatsu-shi, 432-8611 (JP)
• KIMIZUKA, Sohei
Hamamatsu-shi, 432-8611 (JP)

(74) Representative: Plasseraud IP
104 Rue de Richelieu
CS92104
75080 Paris Cedex 02 (FR)

(54) **RUST DETECTING DEVICE**

(57) [Problem to be Solved] Provide a rust detecting device capable of efficiently determining a rust susceptibility of a joining surface at which a plurality of members is joined.

[Solution] A rust detecting device 1 includes a detecting unit 12 configured to determine a rust susceptibility of a joining surface BP based on input information Iin including information indicating a complexity of a shape of the joining surface BP. The detecting unit 12 may determine a rust susceptibility of the joining surface BP by providing the input information Iin to a machine learning-trained model M. The information indicating a complexity of a shape of the joining surface BP may be expressed by an area-to-perimeter ratio of the joining surface BP.

FIG. 1

EP 4 571 291 A1

## Description

[Technical Field]

The present invention relates to a rust detecting device.

[Background Art]

For example, Patent Literature 1, as a conventional technology related to rust detection discloses a steel bridge rust formation influencing factor evaluation method of evaluating characteristics of rust predicted to be formed based on influencing factors that affect formation of the rust on a steel bridge on the surface of which formation of the rust is predicted. In this method, the surface of the steel bridge is divided into a plurality of sites, and the influencing factors are a plurality of influencing factors with mutually different influences on formation of rust. Then, each of the plurality of influencing factors is quantified as a numerical value that reflects the degree of influence on formation of rust for each of the plurality of sites, and the plurality of quantified influencing factors are multiplied for each of the plurality of sites. Accordingly, characteristics of the rust predicted to be formed on the surface of the steel bridge is evaluated for each of the plurality of sites.

[Citation List]

[Patent Literature]

[Patent Literature 1] JP 2008-267121 A

[Summary of Invention]

[Problem to be Solved by the Invention]

The above-described Patent Literature 1 describes rust predicted to be formed on the surface of a steel bridge, but has no specific description of rust on a joining surface at a joining of the steel bridge.

For example, in a structural body such as a vehicle, rust is formed at a joining surface at which a plurality of members is joined in some cases. Knowing the rust susceptibility of such a joining surface in advance is advantageous for design of the structural body of such a vehicle.

The present invention is made in view of the above-described point and is intended to provide a rust detecting device capable of efficiently determining the rust susceptibility of a joining surface at which a plurality of members is joined.

[Means for Solving the Problem]

To achieve the above-described intention, a rust detecting device according to the present invention is configured to determine a rust susceptibility of a joining surface at which a plurality of members is joined based on input information including a complexity of a shape of the joining surface.

[Advantageous Effect of Invention]

With a rust detecting device according to the present invention, it is possible to efficiently determine the rust susceptibility of a joining surface at which a plurality of members is joined.

[Brief Description of Drawings]

[Figure 1] Figure 1 is a block diagram illustrating an exemplary functional configuration of a rust detecting device according to an embodiment of the present invention.
[Figure 2] Figure 2 is a perspective view schematically illustrating a joining surface in the above-described embodiment.
[Figure 3] Figure 3 is a block diagram illustrating an exemplary computer hardware configuration of the rust detecting device according to the above-described embodiment.
[Figure 4] Figure 4 is a schematic diagram for description of processing by a detecting unit in the above-described embodiment.
[Figure 5] Figure 5 is a diagram illustrating a specific example of input information and output information in the above-described embodiment.
[Figure 6] Figure 6 is a top view for description of a first example related to the shape of a joining surface and a state after electrodeposition coating.
[Figure 7] Figure 7 is a top view for description of a second example related to the shape of a joining surface and a state after electrodeposition coating.
[Figure 8] Figure 8 is a top view for description of the relation between the first and second examples related to the shape of a joining surface.
[Figure 9] Figure 9 is a top view for description of the relation between the first and second examples related to the shape of a joining surface.
[Figure 10] Figure 10 is a perspective view illustrating an example in which the diameter of the incircle of a joining surface is used in place of (area)/(perimeter) thereof.
[Figure 11] Figure 11 is a perspective view illustrating an example of an image visually representing the rust susceptibility of a joining surface in the above-described embodiment.
[Figure 12] Figure 12 is a block diagram illustrating a functional configuration of a rust detecting system according to a modification related to the above-described embodiment.

[Mode for Carrying Out the Invention]

The present invention will be described below based on an illustrated embodiment. However, the present invention is not limited to the embodiment described below.

In design of a structural body such as a vehicle as described above, compliance with design requirements such as strength, stiffness, NVH (noise, vibration, and harshness), and formability is becoming increasingly capable of being automatically determined based on CAD (computer-aided design) data along with maturation of technologies of CAE (computer-aided engineering) analysis.

However, it is difficult to automatically determine rusting of a vehicle body based on CAD data due to interaction of multiple factors such as materials, structure, coating or pretreatment condition, and usage environment and due to complexity of the rust formation mechanism. Thus, in a current process at data phase, a knowledgeable person visually reviews CAD data on a vehicle, estimates places of concern for rust based on past experience and knowledge, incorporates rust prevention measures into CAD data and drawings of the estimated places of concern. Rust evaluation is performed by repeating physical vehicle testing such as exposing, for example, the actual vehicle (prototype) of a developed vehicle to water a plurality of times.

However, visual data inspection is time-consuming and prone to mistakes. Furthermore, physical vehicle testing cannot be performed until an actual vehicle is prepared, and it is also time-consuming. With development schedules becoming increasingly tighter, it is necessary to establish a method capable of accurately and comprehensively determining places of concern for rust in the data phase and to be able to obtain results with a small number of physical vehicle tests.

Typically, for example, a white body of an automobile is provided with electrodeposition coating such as cation electrodeposition coating to ensure rust resistance of a vehicle body. The white body is an assembly of completely welded members constituting the vehicle body in a manufacturing process of the automobile. The white body is not coated nor are an engine, seats, and the like installed. Although a slight gap exists between the joining surface of one member and the joining surface of the other member at a welding joining of the white body, it is difficult for coating to cover the entirety of the joining surfaces, which makes it difficult to ensure rust resistance. The embodiment of the present invention described below relates to a rust detecting device configured to determine rust susceptibility of a joining surface of a vehicle body as described above.

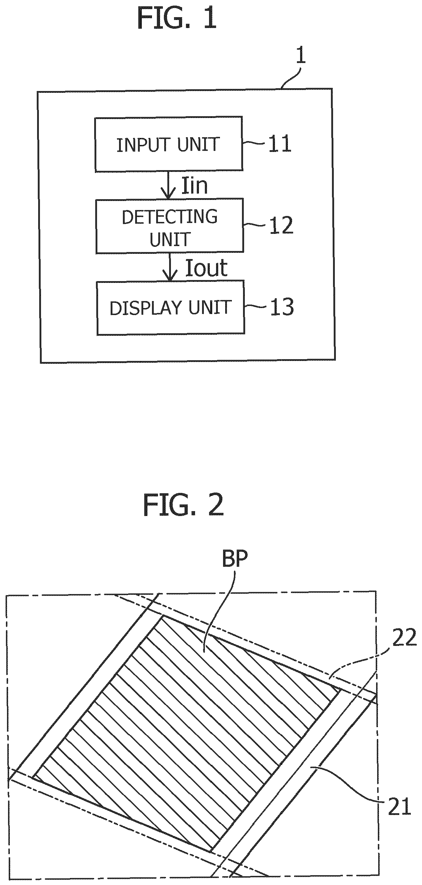

Figure 1 is a block diagram illustrating an exemplary functional configuration of a rust detecting device 1 according to the embodiment of the present invention. Figure 2 is a perspective view schematically illustrating an example of a joining surface BP as a detection target in the present embodiment. In Figures 1 and 2, the rust detecting device 1 of the present embodiment targets, for example, a vehicle such as an automobile and determines the rust susceptibility of a joining surface BP at which a plurality of members constituting the vehicle body is joined.

The "joining surface BP" as a rust detecting target means a surface at which at least two members overlap to be joined. In the example illustrated in Figure 2, the joining surface BP in a quadrilateral shape is formed where the upper surface of a member 21 (solid line) constituting part of the vehicle body is joined to the lower surface of another member 22 (dashed and double-dotted line). Note that the number of members to be joined is not limited to two, and it may be, for example, three or four.

The rust detecting device 1 includes an input unit 11, a detecting unit 12, and a display unit 13 as illustrated in, for example, Figure 1.

The input unit 11 receives input information Iin to be used to determine the rust susceptibility of the joining surface BP as a detecting target. The input information Iin includes information indicating the complexity of the shape of the joining surface BP. The present embodiment describes an example in which three-dimensional CAD data, CAE analysis data, or the like of a vehicle (target object) is used as the input information Iin. Note that details of the input information Iin will be described later.

The detecting unit 12 determines the rust susceptibility of the joining surface BP by, for example, processing the input information Iin received by the input unit 11 in accordance with a predetermined algorithm and outputs output information Iout indicating a result of the detecting to a display unit 1. The algorithm that determines the rust susceptibility of the joining surface BP in accordance with the input information Iin may use, for example, a trained model M subjected to machine learning with a training data set in advance, as described later. The "rust susceptibility" indicates the degree of rust formation on the joining surface BP when the joining surface BP is subjected to a predetermined condition affecting rust on the joining surface BP. The rust susceptibility includes, for example, the degree of color change, the degree of corrosion (such as corrosion depth), and the degree of surface shape change of the joining surface BP. Note that the present embodiment describes an example in which the detecting unit 12 determines the rust susceptibility of the joining surface BP by using the trained model M, but is not limited thereto.

The display unit 13 generates an image visually representing the output information Iout from the detecting unit 12 and displays the image on an image display apparatus (monitor or display), an image projection apparatus (projector), or the like. Accordingly, a user of the rust detecting device 1 can visually recognize the rust susceptibility of the joining surface BP.

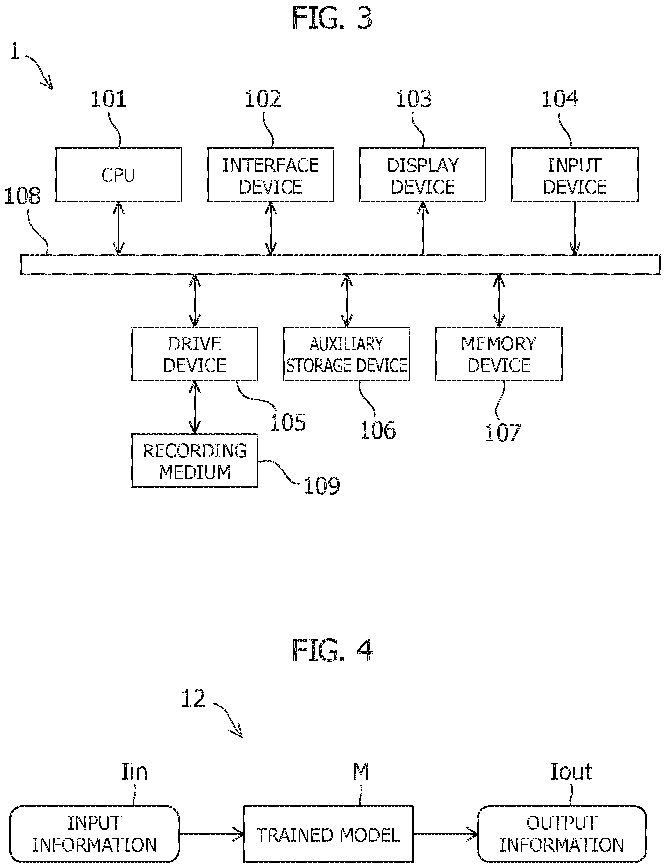

Figure 3 is a block diagram illustrating an exemplary computer hardware configuration of the rust detecting device 1.

In Figure 3, the rust detecting device 1 includes a CPU 101, an interface device 102, a display device 103, an input device 104, a drive device 105, an auxiliary storage device 106, and a memory device 107, and these components are mutually connected through a bus 108.

A computer program that implements functions of the rust detecting device 1 is provided by a recording medium 109 such as a CD-ROM. When the recording medium 109 in which the computer program is recorded is set to the drive device 105, the computer program is installed from the recording medium 109 onto the auxiliary storage device 106 through the drive device 105. Alternatively, installation of the computer program does not necessarily need to be performed by the recording medium 109 but may be performed through a network. The auxiliary storage device 106 stores the installed computer program and also stores necessary files, data, and the like.

When activation of the computer program is instructed, the memory device 107 reads the computer program from the auxiliary storage device 106 and stores the computer program. The CPU 101 implements functions of the rust detecting device 1 in accordance with the computer program stored in the memory device 107. The interface device 102 is used as an interface for connecting to another computer through a network. The display device 103 displays a GUI (graphical user interface) of the computer program or the like. The input device 104 includes a keyboard and a mouse.

Processing of determining the rust susceptibility of the joining surface BP, which is executed by the detecting unit 12 (Figure 1) of the rust detecting device 1 will be described below in detail with reference to Figure 4.

In the present embodiment, the detecting unit 12 includes the machine learning-trained model M as the algorithm that determines the rust susceptibility of the joining surface BP as described above. In the detecting unit 12, the input information Iin received by the input unit 11 is provided to the trained model M as illustrated in Figure 4. Accordingly, information related to the rust susceptibility of the joining surface BP corresponding to the input information Iin is output from the detecting unit 12 as the output information Iout of the trained model M.

The input information Iin includes rust detecting information that is necessary for performing rust susceptibility detection by the detecting unit 12. The rust detecting information includes at least one input data related to factors (hereinafter referred to as "rust influencing factors") that affects the rust susceptibility of the joining surface BP as a detecting target. The input data is extracted or calculated from three-dimensional CAD data, CAE analysis data, or the like of the vehicle (target object). The input data may be quantified numerical data on the rust influencing factors, but is not limited thereto. The input information Iin may be, for example, picture data on surroundings of the joining surface BP, or image capturing data output from an image capturing unit (not illustrated) directly or indirectly connected to the detecting unit 12.

The output information Iout includes information related to the rust susceptibility of the joining surface BP, which is predicted by using the trained model M. The output information Iout may be, for example, output data obtained by quantifying the rust susceptibility of the joining surface BP based on an evaluation indicator, or image data displayed on the above-described image display apparatus or the like for the user to visually recognize the rust susceptibility of the joining surface BP.

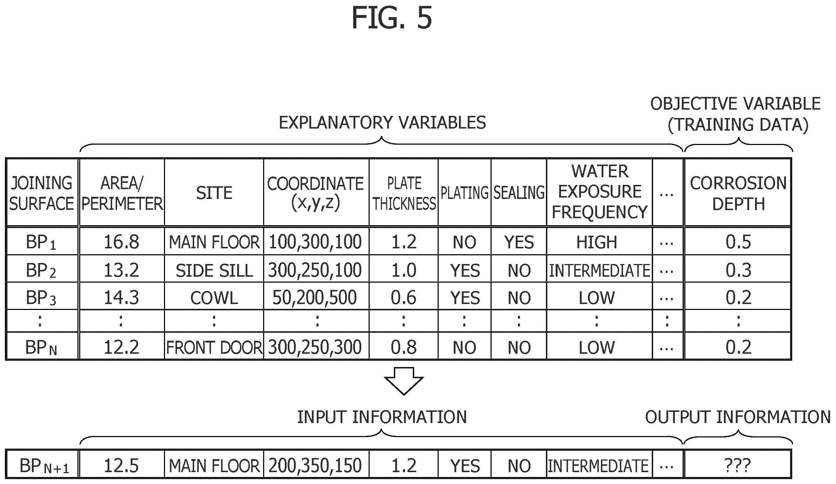

Figure 5 is a diagram illustrating a specific example of the input information Iin and the output information Iout in the present embodiment. The upper part of Figure 5 indicates an example of a data table used for machine learning, and the lower part of Figure 5 indicates an example of prediction of the rust susceptibility of an unknown joining surface by using the trained model M subjected to machine learning with the data table.

In the example illustrated in Figure 5, data such as the area-to-perimeter ratio ((area)/(perimeter)) of the joining surface BP, the position (site and coordinate values) of the joining surface BP, the plate thickness of a member forming the joining surface BP, the presence or absence of plating and sealing, and the water exposure susceptibility (water exposure frequency) of the vehicle in a traveling state is set as input data related to the rust influencing factors of the joining surface BP. In this example, input data on a plurality of items is set as the rust influencing factors of the joining surface BP, and in particular, as described later in detail, the value of (area)/(perimeter) of the joining surface BP is input data that is important for detecting of the rust susceptibility of the joining surface BP, as the information indicating the complexity of the shape of the joining surface BP. For example, the corrosion depth of the joining surface BP is set as the output data obtained by quantifying the rust susceptibility of the joining surface BP based on an evaluation indicator.

In machine learning (upper part of Figure 5) of the model that predicts the rust susceptibility of the joining surface BP, machine learning (supervised learning) using training data (known sample data) indicating the corrosion depth is performed with explanatory variables that are a plurality of pieces of input data corresponding to N different joining surfaces $BP_1$ to $BP_N$, respectively, and an objective variable that is the corrosion depth of each of the joining surfaces $BP_1$ to $BP_N$. In such machine learning, the objective variable means data to be predicted, and the explanatory variables mean data used to predict the objective variable. The machine learning-trained model M may be configured as, for example, a Random Forest.

In prediction (lower part of Figure 5) of the objective variable by using the trained model M as described above, the input information Iin including the above-described plurality of input data is provided to the trained model M for the joining surface $BP_{N+1}$ the rust susceptibility of which is unknown, and accordingly, output data obtained by quantifying the rust susceptibility of the joining surface $BP_{N+1}$ with an evaluation indicator (corrosion depth) is output from the detecting unit 12 as the output information Iout.

The following describes in detail the above-described area-to-perimeter ratio ((area)/(perimeter)) of the joining surface BP as input data that is important for detecting of the rust susceptibility of the joining surface BP.

The inventors of the present invention have found that, as one of the input data, the value of (area)/(perimeter) of the joining surface BP is effective for detection of rust susceptibility. The reason is briefly described below. The shape and area of the joining surface BP affect the rust susceptibility and degree of rusting at the joining surface BP. The parameter (area)/(perimeter) of the joining surface BP includes information on both the shape and area of the joining surface BP. Thus, the rust susceptibility of the joining surface BP can be effectively determined by using the value of (area)/(perimeter) of the joining surface BP as one of the input data.

Specifically, first, influence of the "shape" of the joining surface BP on rust susceptibility will be described in detail. In a case in which the area of the joining surface BP is constant, the perimeter is longer and (area)/(perimeter) is smaller as the shape is more intricate (further from a perfect circle and more complicated). In addition, it is easier for a coating to penetrate the joining surface BP as the perimeter is longer, and thus, rust prevention performance improves in a case in which the joining surface BP is provided with the above-described electrodeposition coating.

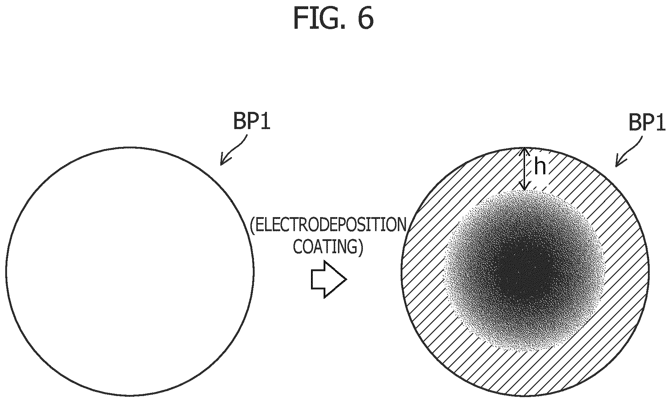

The left side in Figure 6 illustrates a flat and circular joining surface BP1 of a member as a first example related to the shape of the joining surface BP. The joining surface BP1 has an area S (unit: $mm^2$) and a perimeter L (unit: mm). When the electrodeposition coating is performed after another member is joined to the joining surface BP1, coating (hatched part) penetrates the joining surface BP1 after the electrodeposition coating up to a position separated by an interval h (unit: mm) inward from the outer periphery of the joining surface BP1 as illustrated on the right side in Figure 6. Note that a black part near the center of the joining surface BP1 on the right side in Figure 6 exemplarily illustrates the state of rust that would form over time.

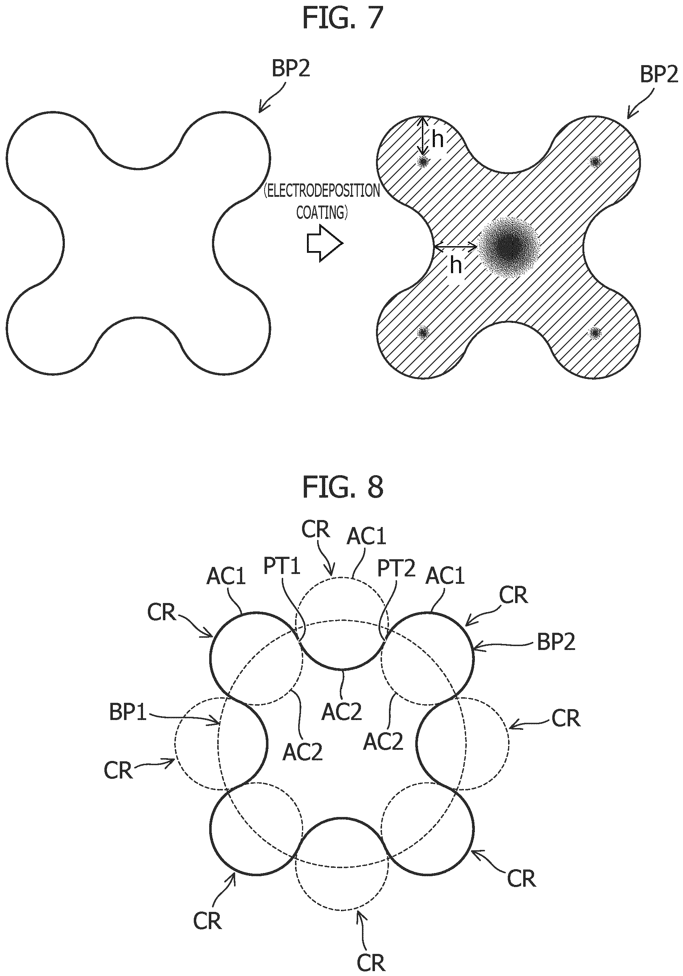

The left side in Figure 7 illustrates a second example related to the shape of the joining surface BP. A joining surface BP2 of the second example has a flat and substantially cross shape and has an area substantially equal to the joining surface BP1. The shape of the joining surface BP2 is complicated as compared to the circular shape of the joining surface BP1.

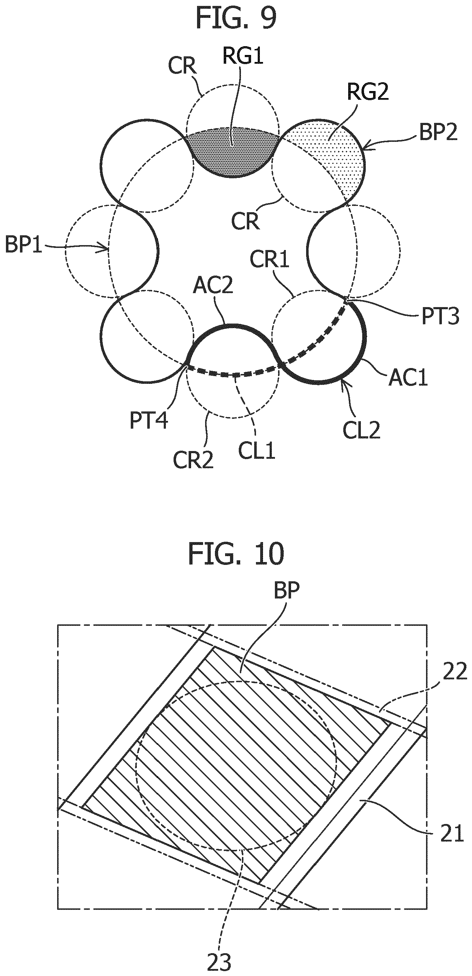

The relationship of the shape between the joining surface BP1 and the joining surface BP2 will be described below with reference to Figures 8 and 9.

Figure 8 illustrates a group of circles including eight circles CR having equal diameters. The center of the group matches the center of the joining surface BP1. The eight circles CR each have a center on the circumference of the joining surface BP1 and are positioned at equal intervals in the circumferential direction of the joining surface BP1, and every two adjacent circles CR in the circumferential direction of the joining surface BP1 are in contact with each other.

Each of the eight circles CR has a contact point PT1 with a circle CR that is adjacent on one direction side in the circumferential direction of the joining surface BP1, and has a contact point PT2 with a circle CR that is adjacent on the other direction side in the circumferential direction of the joining surface BP1. Among two arcs connecting the contact points PT1 and PT2 on the circumference of each circle CR, an arc on the outer side in the radial direction of the joining surface BP1 is denoted by reference sign AC1, and an arc on the inner side in the radial direction of the joining surface BP1 is denoted by reference sign AC2. The joining surface BP2 is formed by connecting an arc AC1 of one circle CR and an arc AC2 of the other circle CR of every two adjacent circles CR.

As illustrated in Figure 9, the area of an overlapping region RG1 between each circle CR and the joining surface BP1 is represented by S1 (unit: $mm^2$). In addition, the area of a non-overlapping region RG2 between each circle CR and the joining surface BP1 is represented by S2 (unit: $mm^2$). In this case, $S1 \approx S2$ holds. Thus, the joining surfaces BP1 and BP2 have substantially equal areas.

In Figure 9, out of every two contacting circles CR, a circle positioned on the anticlockwise direction side on the sheet is referred to as a first circle CR1, and a circle positioned on the clockwise direction side on the sheet is referred to as a second circle CR2. Among two intersection points between the first circle CR1 and the outer periphery of the joining surface BP1, an intersection point on the anticlockwise direction side on the sheet is denoted by reference sign PT3. In addition, among two intersection points between the second circle CR2 and the outer periphery of the joining surface BP1, an intersection point on the clockwise direction side on the sheet is denoted by reference sign PT4. An arc formed with the intersection points PT3 and PT4 on the outer periphery of the joining surface BP1 is denoted by reference sign CL1. The length of the arc CL1 is represented by L1 (unit: mm). In addition, the length of a curve CL2 having an inverted S shape connecting the intersection points PT3 and PT4 on the outer periphery of the joining surface BP2 is represented by L2 (unit: mm). In this case, L1 < L2 holds. Accordingly, the perimeter of the joining surface BP2 is longer than the perimeter of the joining surface BP1.

As described above, comparison shows that the joining surfaces BP1 and BP2 have substantially equal areas and the joining surface BP2 has a perimeter longer than that of the joining surface BP1.

Similarly to the above-described case of the joining surface BP1, when the electrodeposition coating is performed after another member is joined to the joining surface BP2 illustrated on the left side in Figure 7, coating (hatched part) penetrates the joining surface BP2 after the electrodeposition coating up to a position separated by the interval h (unit: mm) inward from the outer periphery of the joining surface BP2 as illustrated on the right side in Figure 7. Note that, similarly to the above-described case of the right side in Figure 6, a black part on the right side in Figure 7 exemplarily illustrates the state of rust that would form over time.

As illustrated in Figures 6 and 7, coating penetrates each of the joining surfaces BP1 and BP2 up to a position separated by the interval h (unit: mm) inward from the outer periphery.

The area of a region at which coating penetrates the joining surface BP1 or BP2 as described above is substantially proportional to the perimeter of the joining surface BP1 or BP2. Specifically, among the joining surfaces BP1 and BP2, BP2 has a perimeter longer than that of BP1, and accordingly, BP2 has a larger area of a region at which coating penetrates. Since the joining surfaces BP1 and BP2 have substantially equal areas, the joining surface BP2 has a larger ratio of the area of a region at which coating penetrates to the area of the entire joining surface. Accordingly, the electrodeposition coating has a greater rust prevention effect on the joining surface BP2 than on the joining surface BP1.

Comparison of the joining surfaces BP1 and BP2 shows that the joining surface BP2 has a smaller value of (area)/(perimeter) than that of the joining surface BP1. Thus, in a case in which the electrodeposition coating is provided on the joining surface BP of an optional shape, the rust prevention effect increases as the value of (area)/(perimeter) decreases.

Subsequently, influence of the "area" of the joining surface BP on the rust susceptibility will be described in detail.

Since area is a two-dimensional quantity whereas perimeter is a one-dimensional quantity, the value of (area)/(perimeter) increases as the area increases. When the scale increases by a factor of n in a case in which the shape of the joining surface BP is similar, the area increases by a factor of $n^2$ and the perimeter increases by a factor of n, and accordingly, the value of (area)/(perimeter) increases by a factor of n. However, the area of a region at which coating penetrates is substantially proportional to the perimeter as described above and thus increases by a factor of n. Accordingly, the ratio of the area of a region at which coating does not penetrate increases as the area of the joining surface BP increases. In other words, as the area of the joining surface BP increases, the value of (area)/(perimeter) increases and the rust prevention effect of the electrodeposition coating decreases.

The above-described influences of the "shape" and "area" of the joining surface BP on the rust susceptibility are summarized as relationships described below in (1) and (2).

(1) As the shape of the joining surface BP approaches that of a perfect circle, the value of (area)/(perimeter) increases and the rust prevention effect of the electrodeposition coating decreases.
(2) As the area of the joining surface BP increases, the value of (area)/(perimeter) increases and the rust prevention effect of the electrodeposition coating decreases.

In the above-described relationships, the value of (area)/(perimeter) is quantified data on the complexity of the shape of the joining surface BP. The "complexity" means a degree indicating the complexity of the shape of the joining surface BP and may be expressed not only by the value of (area)/(perimeter) but also by, for example, "circularity" to be described later, information related to the shape of the joining surface BP, which is acquired from drawing data, a picture, or the like, or information that is set in accordance with the shape of the joining surface BP. Typically, as the joining surface BP has a more complicated shape (intricate shape), a boundary that contacts liquid of the electrodeposition coating increases and the coating is more likely to adhere inside the joining surface BP. This may be likened to a ria coastline, and the area of the coast is greater as the coastline is more intricate. Alternatively, this may be likened to the small intestine, and area for nutrient absorption increases as protrusions and folds increase.

In a case in which the area of the joining surface BP is constant, as the shape is more complicated, the perimeter is longer, the coating is likely to adhere inside the joining surface BP, and the joining surface BP is less susceptible to rust. This means that the rust prevention effect of the electrodeposition coating increases as the value of (area)/(perimeter) indicating the complexity of the shape of the joining surface BP decreases. Moreover, in a case in which the area of the joining surface BP is constant, as the shape is simpler, the perimeter is shorter, the coating is less likely to adhere inside the joining surface, and the joining surface BP is susceptible to rust. This means that the rust prevention effect of the electrodeposition coating decreases as the value of (area)/(perimeter) indicating the complexity of the shape of the joining surface BP increases.

As described above, the parameter (area)/(perimeter) of the joining surface BP is input data that is effective for determining (predicting) the rust susceptibility of the joining surface BP.

Note that the diameter of an incircle 23 contacting the joining surface BP as illustrated in, for example, Figure 10 may be used as input data in place of (area)/(perimeter) of the joining surface BP. Alternatively, two parameters of (area)/(perimeter)$^2$ and the area may be used in place of (area)/(perimeter) of the joining surface BP.

The parameter (area)/(perimeter)$^2$ is a dimensionless value indicating the shape of the joining surface BP, and the area indicates the size of the joining surface BP. By using these two parameters, the contribution of the shape of the joining surface BP and the contribution of the size of the joining surface BP can be separately considered. Alternative parameters to (area)/(perimeter) as described above indicate the complexity of the shape of the joining surface BP, as well.

Moreover, (area)/(perimeter) of the joining surface BP and the circularity of the joining surface BP may be used in combination. The circularity is a numerical value indicating the complexity of a figure and having one as the maximum value, and the numerical value decreases as the figure is more complicated. The circularity can be calculated by a formula below.

$$(\text{circularity}) = 4\pi \times (\text{area})/(\text{perimeter})^2$$

For example, the circularity of an exact circle with a radius r is 1 (maximum value) as follows.

$$(\text{circularity}) = 4\pi \times (\pi r^2)/(2\pi r)^2 = 1$$

Note that the circularity of a square is 0.785, and the circularity of an equilateral triangle is 0.604 approximately. This shows that an equilateral triangle is a more complicated figure than a square.

Subsequently, the input information Iin used to determine the rust susceptibility of the joining surface BP will be specifically described.

As exemplarily illustrated in Figure 5 described above, various kinds of input data are included in the input information Iin used to determine the rust susceptibility of the joining surface BP, and can be roughly classified into (A) to (E) as follows.

(A) Dimension and position information on vehicle body members

For example, three-dimensional CAD data on the vehicle (target object) includes dimension information and position information on each member constituting the vehicle body. Data such as the range, area, perimeter, and shape of the joining surface BP can be acquired based on the dimension information on each member, and a numerical value indicating the complexity of the shape of the joining surface BP, such as (area)/(perimeter) of the joining surface BP described above can be calculated based on the data. Accordingly, the dimension information and position information on each member constituting the vehicle body include information related to the area of the joining surface BP and information related to the perimeter of the joining surface BP. In addition, a site (for example, the main floor, a side sill, a side member, a cowl, or a front door) of the vehicle body to which the joining surface BP corresponds can be specified. Moreover, the three-dimensional coordinate values of the joining surface BP can be acquired based on the position information on each member. The accuracy in determining the rust susceptibility can be increased by taking into consideration that the degree of influence of the rust influencing factors on the joining surface BP changes in accordance with information related to the shape and disposition of the joining surface BP as described above. In addition, data on the plate thickness of each member forming the joining surface BP may be acquired. The shape of joining members deforms when the joining surface BP rusts (corrodes), but the accuracy in determining the rust susceptibility can be further increased by taking into consideration that the manner of the deformation changes in accordance with the plate thickness of each joining member. Note that data on the plate thickness may be the plate thickness of one member among a plurality of members forming the joining surface BP or may be the plate thicknesses of all members.

(B) Structural information on the joining surface BP

The above-described three-dimensional CAD data includes structural information such as the shape and material of the joining surface BP, a joining method (such as fusion welding, pressure welding, or brazing), the number of joining members (such as two-member joining or three-member joining), and joining strength, which are useful as input data for determining (predicting) the rust susceptibility of the joining surface BP. As described above, the shape of the joining surface BP deforms when the joining surface BP rusts (corrodes), but the accuracy in determining the rust susceptibility can be increased by taking into consideration that the manner of the deformation changes in accordance with the structure of the joining surface BP.

(C) Rust prevention treatment information on the joining surface BP

The above-described three-dimensional CAD data and CAE analysis data include information such as presence or absence of rust prevention treatment provided around the joining surface BP, the kind of the rust prevention treatment, and treatment amounts (such as the amount of rust prevention coating and the thickness of coating), which are useful as input data for determining (predicting) the rust susceptibility of the joining surface BP. The "rust prevention treatment" includes, for example, plating (metallic coating), coating (non-metallic coating) such as cation electrodeposition coating or anion electrodeposition coating, application of a rust inhibitor (rust-proofing oil or wax), and sealing (to seal or cover water-prone sites). The accuracy in determining the rust susceptibility can be increased by taking into consideration that the rust susceptibility of the joining surface BP changes in accordance with such information related to the rust prevention treatment. Note that, in a case in which the joining surface BP is provided with no rust prevention treatment, information related to the surface state (surface characteristics) of the joining surface BP may be used as input data.

(D) Rust formation information on the joining surface BP

The above-described CAE analysis data and the like include information related to factors (such as salt-laden wind and exposure to water), frequencies (such as salt-laden wind frequency and water exposure frequency), and influence degree (such as salt-laden wind amount and water exposure amount) of rust formation of the joining surface BP under vehicle traveling conditions, which are useful as input data for determining (predicting) the rust susceptibility of the joining surface BP. The accuracy in determining the rust susceptibility can be increased by taking into consideration that the rust susceptibility of the joining surface BP changes in accordance with such rust formation information.

(E) Other information

In addition to the above-described (A) to (D), for example, environment information such as usage environment (country, area, weather, temperature, and humidity) and usage duration of the vehicle, and the angle of the joining surface BP (one end part of the joining surface in a case in which the joining surface is a curved surface) relative to a horizontal plane while the vehicle is in use are useful as input data for determining (predicting) the rust susceptibility of the joining surface BP. The accuracy in determining the rust susceptibility can be increased by taking into consideration that the manner of adhesion of the rust influencing factors (such as water, salt, and mud) to the joining surface BP changes in accordance with the usage environment of the vehicle and the angle of the joining surface BP.

Various kinds of information (input data) related to the rust influencing factors of the joining surface BP as a detecting target are included in the input information Iin in the present embodiment as described above, and basically can be classified into information (necessary information) indicating the complexity of the shape of the joining surface BP and the other additional information. In other words, the rust susceptibility of the joining surface BP basically can be determined based on information (necessary information) indicating the complexity of the shape of the joining surface BP, and in the present embodiment, the rust susceptibility of the joining surface BP is determined based on the input information Iin additionally including additional information other than the necessary information, thereby increasing the detecting accuracy.

Subsequently, the basic principle of an algorithm (computer program) that determines the rust susceptibility of the joining surface BP by using the input information Iin as described above will be described.

In the rust detecting device 1 of the present embodiment, the three-dimensional CAD data, CAE analysis data, or the like on the vehicle (target object) is input to the detecting unit 12 through the input unit 11, and the rust susceptibility of the joining surface BP is determined while extracting or calculating data that is necessary for detecting of the rust susceptibility of the joining surface BP by using the input information Iin.

Specifically, first, the detecting unit 12 determines whether a region at which a rust prevention material penetrates exists on the joining surface BP as a detecting target based on the dimension and position information on vehicle body members and the structural information and rust prevention treatment information on the joining surface BP, and determines information (such as area, range, and position) related to the penetration region of the rust prevention material in a case in which the penetration region exists. For example, the area, range, or position of penetration of the rust prevention material into a connection surface BP1 may be determined based on the interval h of penetration inward from the outer periphery of the joining surface BP1, which is recorded in advance or input from outside as illustrated in Figure 6, the dimension and position information on vehicle body members, and the structural information on the joining surface BP. Then, the area, range, and position of the entire joining surface BP and the area, range, and position of the penetration region of the rust prevention material are compared to determine whether a region at which the rust prevention material does not penetrate exists on the joining surface BP, and information (such as area, range, and position) related to the non-penetration region of the rust prevention material is determined in a case in which the non-penetration region exists.

Subsequently, the detecting unit 12 determines the rust susceptibility of the penetration region based on the rust prevention treatment information on the joining surface BP and the information related to the penetration region of the rust prevention material, and also determines the rust susceptibility of the non-penetration region based on the rust prevention treatment information on the joining surface BP and the information related to the non-penetration region of the rust prevention material. Then, the rust susceptibility of the entire joining surface BP is determined in accordance with the area ratio of the penetration region and non-penetration region of the rust prevention material. The detecting accuracy improves with consideration of the information indicating the complexity of the shape of the joining surface BP, such as the above-described value of (area)/(perimeter) of the joining surface BP, in detecting of the rust susceptibility of the entire joining surface BP through a series of processes as described above.

In addition, the detecting unit 12 determines the degree of rust (such as corrosion depth) in each of the penetration region and non-penetration region of the rust prevention material in accordance with the usage duration based on the rust formation information on the joining surface BP and the information on usage environment and usage duration of the vehicle. Then, the detecting unit 12 generates the output information Iout related to the rust susceptibility of the entire joining surface BP and the degree of rusting in each of the penetration region and non-penetration region of the rust prevention material, and outputs the output information Iout to the display unit 13.

In the present embodiment, machine learning of a model that predicts the rust susceptibility of the joining surface BP is performed based on the algorithm as described above. The machine learning is carried out by inputting a significant amount of training data to a well-known learning program and correcting the algorithm based on a result of comparison between an execution result of the algorithm and the training data.

Specifically, a training data set as indicated in the upper part of Figure 5 described above, which includes input data (explanatory variables) related to the N joining surfaces $BP_1$ to $BP_N$ and quantified training data (objective variable) of a result of visual check of the rust susceptibility (corrosion depth) corresponding to each of the joining surfaces $BP_1$ to $BP_N$, is input to a learning program compatible with a Random Forest or the like. Then, the degree of rust in each of the penetration region and non-penetration region of the rust prevention material, which corresponds to the input data on the joining surfaces $BP_1$ to $BP_N$ is determined in accordance with the algorithm as described above, and correction of the algorithm is repeated based on a result of comparison with the training data (actual degree of rust). In this process, the relationship between the value of (area)/(perimeter) or the like and the training data for each of the joining surfaces $BP_1$ to $BP_N$ is recorded, and the process is repeated to generate the trained model M capable of determining the rust susceptibility of the joining surface BP with high accuracy.

Once the machine learning-trained model M is generated as described above, the input information Iin including the value of (area)/(perimeter) and the like for the joining surface $BP_{N+1}$ with an unknown degree of rusting as indicated in the lower part of Figure 5 described above is provided to the trained model M, and accordingly, the output information Iout indicating the degree of rusting (corrosion depth) on the joining surface $BP_{N+1}$ as a numerical value is output from the detecting unit 12 to the display unit 13.

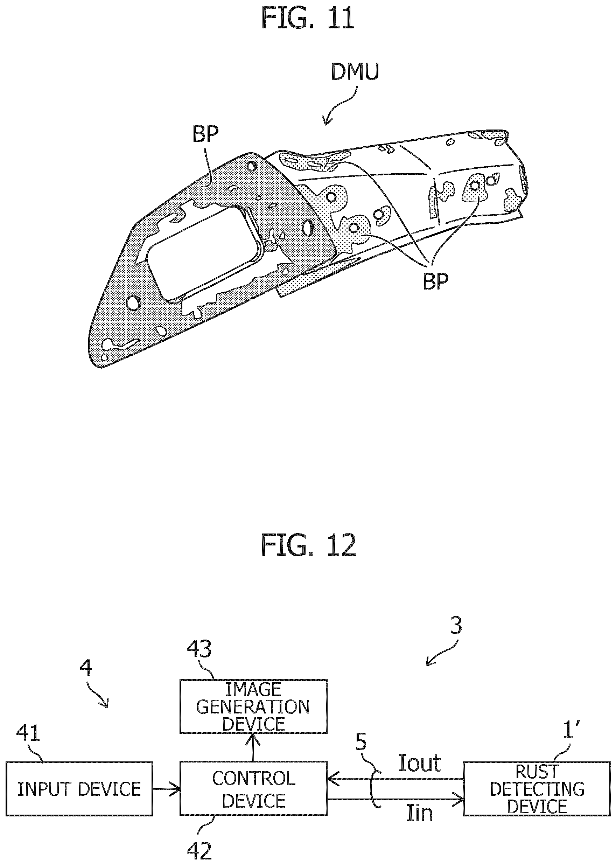

At the display unit 13, an image visually representing the output information Iout from the detecting unit 12 as illustrated in, for example, Figure 11 is generated and displayed on an image display apparatus (monitor or display), an image projection apparatus (projector), or the like. In the example illustrated in Figure 11, digital mock-up (DMU) data produced by using three-dimensional CAD data on joining members is provided with image processing (for example, gradation, hatching, and coloring) with which the rust susceptibility is visually recognizable in image regions corresponding to a plurality of joining surfaces BP as detecting targets.

Subsequently, effects of the rust detecting device 1 according to the present embodiment will be described.

In the rust detecting device 1 as described above, the rust susceptibility of the joining surface BP at which the members 21 and 22 are joined is determined based on the input information Iin including the information indicating the complexity of the shape of the joining surface BP. The information indicating the complexity of the shape of the joining surface BP is data that is effective for determining the rusting susceptibility of the joining surface BP as described above, and thus, the rusting susceptibility of the joining surface BP can be efficiently determined with the rust detecting device 1. In vehicle development using such a rust detecting device 1, compliance related to rust can be determined at the initial data phase of development, and visual inspection for rust prevention inspection can be automated. Accordingly, labor and costs of vehicle development can be significantly reduced.

In the rust detecting device 1 of the present embodiment, the rust susceptibility of the joining surface BP is determined by providing the input information Iin to the machine learning-trained model M. By using the trained model M in this manner, the rust susceptibility can be easily determined without using complicated formulae for determining rusting susceptibility.

In the rust detecting device 1 of the present embodiment, the information indicating the complexity of the shape of the joining surface BP is expressed by the area-to-perimeter ratio ((area)/(perimeter)) of the joining surface. By using, as the information indicating the complexity of the shape of the joining surface BP, such a numerical value representing the relationship between area and perimeter, which can be easily determined from the dimension information on the joining surface BP, the rust susceptibility of the joining surface BP can be determined with simple input information Iin.

In the rust detecting device 1 of the present embodiment, in a case in which the joining surface BP is provided with the rust prevention treatment, the joining surface BP is determined to be less susceptible to rusting as the complexity of the shape of the joining surface BP is greater. There is a tendency that, in a case in which the joining surface BP as a detecting target is provided with the rust prevention treatment, a rust inhibitor is more likely to penetrate the joining surface BP during the rust prevention treatment, and rust is less likely to be formed as the shape of the joining surface BP is more complicated, whereas the rust inhibitor is less likely to penetrate the joining surface BP and rust is more likely to form as the shape of the joining surface BP is simpler. The accuracy in determining the rust susceptibility can be increased by determining the rust susceptibility with such a tendency taken into account. Note that the above-described tendency is inverted in a case in which the joining surface BP as a detecting target is provided with no rust prevention treatment. Specifically, as the shape of the joining surface BP is more complicated, the rust influencing factor (such as water) is more likely to penetrate the joining surface BP, and rust is more likely to form.

In the rust detecting device 1 of the present embodiment, the input information Iin includes the plate thicknesses of the members forming the joining surface BP. The shape of the members forming the joining surface BP deforms when the joining surface BP rusts (corrodes), and the manner of the deformation changes in accordance with the plate thicknesses of the members. Thus, the detecting accuracy can be further increased by including the plate thicknesses as the input information Iin for rust susceptibility detection.

In the rust detecting device 1 of the present embodiment, the input information Iin includes information related to the rust prevention treatment of the joining surface BP. The rust susceptibility changes in accordance with presence or absence of the rust prevention treatment, the kind of the rust prevention treatment, and treatment amounts (such as the amount of rust prevention coating and the thickness of coating). Thus, the detecting accuracy can be further increased by including information related to the rust prevention treatment as the input information Iin for rust susceptibility detecting.

In the rust detecting device 1 of the present embodiment, the input information Iin includes the angle of the joining surface BP relative to a reference plane during use or testing of the vehicle (target object) including the members 21 and 22. The manner of adhesion of the rust influencing factors (water, salt, and mud) to the joining surface BP changes in accordance with the angle of the joining surface BP. Thus, the detecting accuracy can be further increased by including the angle of the joining surface BP as the input information Iin for rust susceptibility detection.

In the rust detecting device 1 of the present embodiment, the input information Iin includes at least one of information related to the position of the joining surface BP in the vehicle (target object) including the members 21 and 22 and information related to the kind of each of the members 21 and 22. Since the degree of influence of the rust influencing factor on the joining surface BP changes in accordance with the position of the joining surface BP and the kinds of joining members, the detecting accuracy can be improved by including such information in the input information Iin for rust susceptibility detection.

In the rust detecting device 1 of the present embodiment, the input information Iin includes information related to the occurrence frequency or occurrence amount of events that affect rust formation on the joining surface BP. Accordingly, results of rust susceptibility detecting can be aligned with testing results of vehicle members, and the rust detecting accuracy can be further improved.

Although the embodiment of the present invention is described above, the present invention is not limited to the above-described embodiment but may be modified and changed in various manners based on the technical concept of the present invention. For example, in the above-described embodiment, the rust detecting device 1 includes the input unit 11 and the display unit 13 and information related to detecting of the rust susceptibility of the joining surface BP is directly input to and output from the rust detecting device 1. However, information being input to and being output from the rust detecting device 1 may be indirectly performed by communication or the like as in a modification described below.

Figure 12 is a block diagram illustrating a functional configuration of a rust detecting system 3 according to the modification related to the above-described embodiment. In the modification illustrated in Figure 12, a rust detecting device 1' provided on a cloud server and an information processing unit 4 provided on a client side are connected to each other through a communication line 5 such as the Internet or an intranet to establish the rust detecting system 3.

The rust detecting device 1' is configured to receive the input information Iin transmitted from the information processing unit 4 on the client side through the communication line 5, determine the rust susceptibility of the joining surface BP based on the input information Iin, and return the output information Iout indicating a result of the detecting to the information processing unit 4 through the communication line 5. In other words, the rust detecting device 1' in the modification has functions corresponding to the detecting unit 12 in the rust detecting device 1 in the above-described embodiment, and functions corresponding to the input unit 11 and the display unit 13 are provided on the client side.

The information processing unit 4 on the client side corresponds to, for example, a computer on which an application such as a three-dimensional CAD is installed. In the example illustrated in Figure 12, the information processing unit 4 includes an input device 41, a control device 42, and an image generation device 43. Various kinds of information (such as numerical values and images) are input to the input device 41 by a keyboard, a mouse, a camera, and the like, and the input information is transferred to the control device 42.

Based on three-dimensional CAD data, CAE analysis data, or the like operated in accordance with the input information from the input device 41, the control device 42 generates the input information Iin to be used to determine rusting at the joining surface BP. Then, the control device 42 transmits the generated input information Iin to the rust detecting device 1' through the communication line 5 in accordance with a predetermined communication protocol. In addition, the control device 42 receives the output information Iout indicating the rust susceptibility of the joining surface BP, which is determined by the rust detecting device 1', through the communication line 5 and transfers the output information Iout to the image generation device 43 together with the three-dimensional CAD data or the like.

Based on the output information Iout and the three-dimensional CAD data from the control device 42, the image generation device 43 generates an image (Figure 11) by subjecting DMU data on joining members to image processing with which the rust susceptibility of the joining surface BP is visually recognizable, and displays the image. Accordingly, a user operating the information processing unit 4 on the client side can visually recognize the rust susceptibility of the joining surface BP.

Note that the rust detecting devices 1 and 1' according to the embodiment and the modification disclosed in the present specification possess not only the aspect of being a device, but also aspects of being a method and a computer program.

[Reference Signs List]

1, 1' Rust detecting device
11 Input unit
12 Detecting unit
13 Display unit
21, 22 Member
23 Incircle
3 Rust detecting system
4 Information processing unit
41 Input device
42 Control device
43 Image generation device
5 Communication line
BP, BP1, BP2, $BP_1$ to $BP_{N+1}$ Joining surface
Iin Input information
Iout Output information

**Claims**

1. A rust detecting device configured to determine a rust susceptibility of a joining surface at which a plurality of members is joined based on information indicating a complexity of a shape of the joining surface.

2. The rust detecting device according to claim 1, wherein the information indicating the complexity of the shape of the joining surface is expressed by the area-to-perimeter ratio of the joining surface.

3. The rust detecting device according to claim 1, wherein the information indicating the complexity of the shape of the joining surface is determined based on information related to the area of the joining surface and information related to the perimeter of the joining surface.

4. The rust detecting device according to claim 1, wherein in a case in which the joining surface is provided with rust prevention treatment, the joining surface is determined to be less susceptible to rust as the complexity of the shape of the joining surface is greater.

5. The rust detecting device according to claim 1, wherein the rust susceptibility of the joining surface is determined based on input information including the information indicating the complexity of the shape of the joining surface.

6. The rust detecting device according to claim 5, wherein the rust susceptibility of the joining surface is determined by providing the input information to a machine learning-trained model.

7. The rust detecting device according to claim 5, wherein the input information includes plate thicknesses of the members forming the joining surface.

8. The rust detecting device according to claim 5, wherein the input information includes information related to rust prevention treatment of the joining surface.

9. The rust detecting device according to claim 5, wherein the input information includes an angle of the joining surface relative to a reference plane during use or testing of a target object including the plurality of members.

10. The rust detecting device according to claim 5, wherein the input information includes at least one of information related to a position of the joining surface in a target object including the plurality of members and information related to a kind of each of the plurality of members.

11. The rust detecting device according to claim 5, wherein

    the plurality of members are members used in a vehicle, and
    the input information includes information related to an occurrence frequency or occurrence amount of events that affect rust formation on the joining surface.

12. An image generation device configured to generate an image visually representing information related to the rust susceptibility determined by the rust detecting device according to claim 1.

13. An information processing unit configured to receive and process information related to the rust susceptibility determined by the rust detecting device according to claim 1.

14. A computer program for causing a computer to function as the rust detecting device according to claim 1.

# FIG. 1

1

| INPUT UNIT | 11 |

↓ Iin

| DETECTING UNIT | 12 |

↓ Iout

| DISPLAY UNIT | 13 |

# FIG. 2

BP

22

21

## FIG. 3

## FIG. 4

# FIG. 5

EXPLANATORY VARIABLES · · · OBJECTIVE VARIABLE (TRAINING DATA)

| JOINING SURFACE | AREA/ PERIMETER | SITE | COORDINATE (x,y,z) | PLATE THICKNESS | PLATING | SEALING | WATER EXPOSURE FREQUENCY | ... | CORROSION DEPTH |
|---|---|---|---|---|---|---|---|---|---|
| $BP_1$ | 16.8 | MAIN FLOOR | 100,300,100 | 1.2 | NO | YES | HIGH | ... | 0.5 |
| $BP_2$ | 13.2 | SIDE SILL | 300,250,100 | 1.0 | YES | NO | INTERMEDIATE | ... | 0.3 |
| $BP_3$ | 14.3 | COWL | 50,200,500 | 0.6 | YES | NO | LOW | ... | 0.2 |
| ⋮ | ⋮ | ⋮ | ⋮ | ⋮ | ⋮ | ⋮ | ⋮ | ⋮ | ⋮ |
| $BP_N$ | 12.2 | FRONT DOOR | 300,250,300 | 0.8 | NO | NO | LOW | ... | 0.2 |

INPUT INFORMATION · · · OUTPUT INFORMATION

| $BP_{N+1}$ | 12.5 | MAIN FLOOR | 200,350,150 | 1.2 | YES | NO | INTERMEDIATE | ... | ??? |
|---|---|---|---|---|---|---|---|---|---|

FIG. 6

BP1

BP1

(ELECTRODEPOSITION
COATING)

h

## FIG. 7

BP2

(ELECTRODEPOSITION COATING)

BP2

h

h

## FIG. 8

CR AC1
AC1 PT1 PT2 AC1
CR CR
BP2
AC2
BP1 AC2 AC2 CR
CR AC2
CR
CR
CR
CR

# FIG. 9

CR
RG1
RG2
BP2
CR
BP1
CR1
AC2
PT3
AC1
PT4
CL2
CR2   CL1

# FIG. 10

BP
22
21
23

# FIG. 11

DMU

BP

BP

# FIG. 12

3

43

IMAGE GENERATION DEVICE

4

41

INPUT DEVICE

5

Iout

1′

CONTROL DEVICE

RUST DETECTING DEVICE

Iin

42

Europäisches
Patentamt
European
Patent Office
Office européen
des brevets

# EUROPEAN SEARCH REPORT

**Application Number**

EP 24 20 6528

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | I C Handsy: "ACES. Accelerated Corrosion Expert Simulator", 2009 DoD corrosion conference, 1 February 2010 (2010-02-01), XP093163955, Retrieved from the Internet: URL:https://www.dau.edu/sites/default/file s/Migrated/CopDocuments/Accelerated%20Corr osion%20Expert%20Simulator%20ACES.pdf * the whole document * | 1-14 | INV. G01N17/00 |
| X | US 2018/017481 A1 (THOMPSON RICHARD JOEL [US] ET AL) 18 January 2018 (2018-01-18) * paragraph [0006] - paragraph [0009] * * paragraph [0033] - paragraph [0054]; figures * | 1-14 | |
| A | WO 01/80043 A2 (EXTERNAL CORROSION MAN LTD [GB]; DUNHAM MARK [GB]) 25 October 2001 (2001-10-25) * the whole document * | 1-14 | |
| A | WO 2022/251906 A1 (ABYSS SOLUTIONS PTY LTD [AU]) 8 December 2022 (2022-12-08) * paragraph [0008] - paragraph [0037] * * paragraph [0104] - paragraph [0111] * * figures * | 1-14 | **TECHNICAL FIELDS SEARCHED (IPC)** G01N |

The present search report has been drawn up for all claims

| Place of search | Date of completion of the search | Examiner |
|---|---|---|
| The Hague | 7 March 2025 | Savage, John |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 6528

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2025

| Patent document cited in search report | Publication date | Patent family member(s) | | Publication date |
|---|---|---|---|---|
| US 2018017481 A1 | 18-01-2018 | NONE | | |
| WO 0180043 A2 | 25-10-2001 | AU | 4856001 A | 30-10-2001 |
| | | GB | 2367398 A | 03-04-2002 |
| | | WO | 0180043 A2 | 25-10-2001 |
| WO 2022251906 A1 | 08-12-2022 | EP | 4348575 A1 | 10-04-2024 |
| | | US | 2024257327 A1 | 01-08-2024 |
| | | WO | 2022251906 A1 | 08-12-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008267121 A